# EUROPÄISCHE PATENTSCHRIFT

(11) **EP 1 851 267 B1**
(45) Veröffentlichungstag und Bekanntmachung des Hinweises auf die Patenterteilung: **03.09.2008**
(21) Anmeldenummer: 06706811.4
(22) Anmeldetag: 10.02.2006
(51) Int. Cl.: C08J 7/04, C09D 5/24, C09D 1/00

(54) **FOLIE ODER PLATTE MIT ELEKTRISCH LEITFÄHIGER BESCHICHTUNG, VERFAHREN ZU IHRER HERSTELLUNG, SOWIE VERWENDUNGEN**
FILM OR SHEET WITH ELECTRICALLY-CONDUCTING COATING METHOD FOR PRODUCTION AND USES THEREOF
PELLICULE OU PLAQUE A REVETEMENT ELECTROCONDUCTEUR, PROCEDE DE FABRICATION ET UTILISATIONS

(30) Priorität: 23.02.2005 DE 102005008550; 18.03.2005 DE 102005013082
(43) Veröffentlichungstag der Anmeldung: 07.11.2007
(73) Patentinhaber: Evonik Röhm GmbH, 64293 Darmstadt (DE)
(72) Erfinder: NEUHÄUSER, Achim, 55128 Mainz (DE); DICKHAUT-BAYER, Günther, 64560 Riedstadt (DE); KROHMER, Christoph, 64589 Stockstadt/Rhein (DE); BECKER, Patrick, 64367 Mühltal (DE); NEEB, Rolf, 64367 Mühltal (DE); SEYOUM, Ghirmay, 63329 Egelsbach (DE)
(86) Internationale Anmeldenummer: PCT/EP2006/001181
(87) Internationale Veröffentlichungsnummer: WO 2006/089646

(56) Entgegenhaltungen:
- EP-A- 0 579 121
- EP-A- 0 657 774
- US-A1- 2005 214 526

## Beschreibung

Die Erfindung betrifft ein Verfahren zur Herstellung von Folien oder Platten aus thermoplastischem Kunststoff mit elektrisch leitfähiger (antistatischer) Beschichtung, die Folien und Platten sowie deren Verwendung.

### Stand der Technik

Es ist bekannt, dass Gegenstände aus Kunststoff statische elektrische Ladungen z. B. durch Reibung akkumulieren können. Die elektrische Aufladung kann zu zahlreichen Problemen führen. Schmutz- oder Staubpartikel werden vermehrt angezogen, was zu einer übermäßigen Verschmutzung der Artikel führen kann. Auf photographischen Filmen können unerwünschte Entladungen zu Entladungsmarken führen und die Filme unbrauchbar machen. In elektronischen Geräten können statische Auf- und Entladungen zu Fehlfunktionen führen. Personen können bei Kontakt mit Gegenständen aus Kunststoff elektrischen Schlägen ausgesetzt werden. Durch elektrische Entladungen können im Extremfall sogar Staubexplosionen oder ein Entflammen leicht entzündlicher Substanzen verursacht werden. Für Anwendungen in kritischen Bereichen ist man daher bestrebt einer statischen Aufladung von Gegenständen aus Kunststoff durch Erdung in Form von elektrisch leitfähigen Schichten entgegenzuwirken.

EP-B 0 447 603 beschreibt antistatische Beschichtungszusammensetzungen enthaltend eine Silikat-Lösung und eine leitfähige Lösung. Beide Lösungen werden gemischt, um zu hydrolysieren und zu der genannten Beschichtungszusammensetzungen zu polykondensieren, die eine chemische Bindung zwischen dem Silikat und dem leitfähigen Material aufweist.

Die Beschichtungszusammensetzungen eignen sich zur Herstellung antstatischer, nicht blendender Bildwidergabeschirme aus Glas- oder Kunststoffpaneel.

US 4,571,361 beschreibt antistatisch ausgerüstete Kunststofffolien. Dabei werden Folien aus z. B. Celluloseacetat oder Polyethylenterephthalat mit , polymerisierbaren Lacksystemen, die z. B. Antimon-Zinn-Oxid-Teilchen enthalten können, beschichtet. Man erhält Folien mit abriebfesten Beschichtungen und geringem Oberflächenwiderständen im Bereich kleiner/gleich 10⁷Ω.

WO 96/40519 beschreibt die kontinuierliche Herstellung von Kunststoffplatten mit einer geprägten dekorativen Mattstruktur mittels Transferlaminierung eines dekorativen Oberflächenfilms von einer Trägerfolie während des Extrusionsverfahren der Kunststoffplatte.
EP-A 0 193 269 betrifft Substrate, die mit Silica-Partikeln beschichtet sind. Die Beschichtung ist sehr gleichmäßig in Bezug auf die Schichtdicke, haftet außerordentlich fest am Substrat und weist gute antireflektierende Eigenschaften auf.
US 5,106,710 beschreibt ein elektrographisches Verfahren zur Erzeugung farbiger Bilder in einem nach elektrostatischem Prinzip arbeiteten Drucker.
Dabei werden zunächst Trägerfolien mit den flüssigen pigmentierten Druckbeschichtungszusammensetzungen beschichtet, diese getrocknet und die Bedruckung anschließend auf eine weitere Folie oder Platte übertragen.

EP 0657 774 A1 beschreibt ein Verfahren zum Beschichten einer antistatischen Schutzschicht auf einem Substrat.
EP 0 579 121 A2 offenbart eine Polyesterfolie, enthaltend eine Beschichtungsschicht.

### Aufgabe und Lösung

Es ist bekannt Substrate wie z. B. Glas oder Kunststoffkörper mit anorganischen Schichten, die z. B. antistatische Eigenschaften aufweisen können, zu versehen. Dabei werden in der Regel die Beschichtungen mittels Lacksystemen, die durch Trocknung oder Polymerisation gehärtet werden können, auf die Substratoberfläche aufgebracht. Man erhält beschichtete Substrate mit durchaus befriedigenden Eigenschaften in Bezug auf Abriebfestigkeit und z. B. elektrische Leitfähigkeit.

US 4,571,361 beschreibt antistatisch ausgerüstete Kunststofffolien. Dabei werden Folien aus z. B. Celluloseacetat oder Polyethylenterephthalat mit polymerisierbaren Lacksystemen, die z. B. Antimon-Zinn-Oxid-Teilchen enthalten können, beschichtet. Man erhält Folien mit abriebfesten Beschichtungen und geringem Oberflächenwiderständen im Bereich kleiner/gleich 10⁷Ω. Die polymerisierbaren Lacksysteme werden zunächst auf die Folien durch Gießen, Rakeln oder Lackieren aufgebracht, getrocknet und anschließend durch Einwirken ionisierender Strahlung polymerisiert. Die auf polymerisierbaren Lacksystemen basierenden elektrisch leitenden Schichten dürften den Nachteil aufweisen, dass sie außerordentlich fest auf dem Substrat haften und sich deshalb praktisch nicht für ein Transferverfahren eignen.

Die WO 96/40519 beschreibt die kontinuierliche Herstellung von Kunststoffplatten mit einer geprägten dekorativen Mattstruktur mittels Transferlaminierung eines dekorativen Oberflächenfilms von einer Trägerfolie während des Extrusionsverfahren der Kunststoffplatte. Hier werden jedoch polymere Filme übertragen, so dass keine Anregungen für einen Folientransfer von elektrisch leitenden Schichten auf anorganischer Basis entnommen werden können.

Es wurde als Aufgabe gesehen, ein Verfahren zur Extrusion von Folien oder Platten aus thermoplastischen Kunststoffen bereitzustellen, bei dem elektrisch leitfähige Beschichtungen kontinuierlich aufgebracht werden können. Die elektrisch leitfähige Beschichtung der Folien oder Platten soll eine, zumindest akzeptable bis gute Abriebfestigkeit aufweisen.

Die Aufgabe wird gelöst durch ein Verfahren zur. Herstellung von Folien oder Platten aus thermoplastischem Kunststoff mit elektrisch leitfähiger (antistatischer) Beschichtung mittels der Verfahrensschritte
a) Einseitiges Beschichten einer Trägerfolie aus einem thermoplastischen Kunststoff mit einer Lackzusammensetzung auf Basis von Silicium-Oxid-Teilchen und anorganischen Halbleiter-Teilchen in einem Lösemittel oder einem Lösemittelgemisch, das gegebenenfalls zusätzlich ein Verlaufshilfsmittel enthalten kann mittels Rakeln, Fluten oder Tauchen oder kontinuierlicher Beschichtung und anschließendem Trocknen der Beschichtung,
b) Extrudieren eines Schmelzestrangs eines thermoplastischen Kunststoffs, der die gleiche oder eine niedrigere Erweichungstemperatur wie der thermoplastische Kunststoff der Trägerfolie aufweist, auf einer Extrusionsanlage durch eine Breitschlitzextrusionsdüse für Platten oder Folien mit anschließendem Walzenglättwerk,
c) Zusammenbringen der beschichteten Seite der Trägerfolie mit dem Schmelzestrang des extrudierten thermoplastischen Kunststoffs im Walzenspalt des Glättwerks unter Druck und bei einer Walzentemperatur die um nicht mehr als 5°C unter der Vicaterweichungstemperatur des extrudierten thermoplastischen Kunststoffs liegt, wodurch ein Verbund der beschichteten Trägerfolie mit dem Schmelzestrang entsteht
d) Abziehen der Trägerfolie vom Verbund bei einer Temperatur die mindestens 5°C unter der Vicaterweichungstemperatur des extrudierten thermoplastischen Kunststoffs liegt, wobei die Beschichtung der Trägerfolie auf dem extrudierten thermoplastischen Kunststoff verbleibt
e) Abkühlen der Kunststoffbahn auf Umgebungs- oder Raumtemperatur, sofern dies noch nicht in Schritt d) geschehen ist.

### Ausführung der Erfindung

Die Erfindung betrifft ein Verfahren zur Herstellung von Folien oder Platten aus thermoplastischem Kunststoff mit elektrisch leitfähiger (antistatischer) Beschichtung, die Folien und Platten sowie deren Verwendung.

### Meßmethoden

### Molekulargewicht M_{w}

Die Bestimmung des Molekulargewichts M_{w} (Gewichtsmittel) kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

### Vicaterweichungstemperatur

Die Vicaterweichungstemperatur (VET) wird nach DIN 306 B/50 bestimmt.

### Scheuertestbelastung

Die Bestimmung der Haftung der Beschichtung gemäß dem Nassscheuertest nach DIN 53778 kann z. B. mit einem Nassscheuertestgerät der Fa. Gardner, Modell M 105/A durchgeführt werden.

### Oberflächenwiderstand

Die Bestimmung des Oberflächenwiderstands der Beschichtung kann z. B. nach DIN EN 613402/IEC 61340 mit einem Ohmmeter der Fa. Wolfgang Warmbier, Modell SRM-110 durchgeführt werden.

### Teilchengrößenmessung

Die Ermittlung der Teilchengröße sowie der Teilchengrößenverteilung kann mittels Laserextinktionsverfahren erfolgen. Hierbei kann ein Galay-CIS der Firma L.O.T. GmbH verwendet werden, wobei die Messmethode zur Bestimmung der Teilchengröße sowie der Teilchengrößenverteilung im Benutzerhandbuch enthalten ist. Die mittlere Teilchengröße von V₅₀ ergibt sich aus dem Median des Gewichtsmittels, wobei 50 Gew.-% der Teilchen kleiner oder gleich und 50 Gew.-% dieser Teilchen größer oder gleich diesem Wert sind.

### Das Verfahren umfaßt zumindest die Verfahrensschritte a) bis e)

### Verfahrenschritt a)

Der Verfahrensschritt a) umfasst ein (zumindest) einseitiges Beschichten einer Trägerfolie aus einem thermoplastischen Kunststoff mit einer Lackzusammensetzung, auf Basis von Silicium-Oxid-Teilchen und anorganischen Halbleiter-Teilchen, insbesondere mit Antimon oder Indium dotierte Zinn-Oxid-Teilchen (Indium-Zinn-Oxid-Teilchen oder Antimon-Zinn-Oxid-Teilchen) in einem Lösemittel oder einem Lösemittelgemisch, das gegebenenfalls zusätzlich ein Verlaufshilfsmittel enthalten kann.

Das zumindest einseitige Beschichten kann mittels Rakeln, Fluten oder Tauchen (beidseitige Beschichtung) oder bevorzugt durch kontinuierliche einseitige Beschichtung (s. z. B. WO 96/40519) erfolgen. Dem Fachmann sind die genannten Methoden bekannt. Nach dem Auftrag der Lackzusammensetzung wird diese zu einer festen elektrisch leitfähigen bzw. antistatischen Beschichtung getrocknet.

### Die Trägerfolie

Die Trägerfolie besteht aus einem thermoplastischen Kunststoff. Geeignete Kunststoff für die Trägerfolie sind z. B. Polyamide, Polycarbonate, Polystyrole, Polyester, beispielsweise Polyethylenterephtalat (PET), die auch mit Glykol modifiziert sein können, und Polybutylenterephtalat (PBT), cycloolefinische Copolymere (COC), Acrylnitril/Butadien/Styrol-Copolymere und/oder Poly(meth)acrylate. Bevorzugt ist Polyethylentherephthalat.
Der Kunststoff der Trägerfolie soll zumindest die gleiche oder bevorzugt aber eine höhere Vicaterweichungstemperatur, besonders bevorzugt eine um mindestens 10 °C, insbesondere eine um 10 bis 80 °C höhere Vicaterweichungstemperatur als der extrudierte Kunststoff für die Folien oder Platten haben.

Die Trägerfolie kann z. B. eine Dicke im Bereich von 20 µm bis < 1 mm, insbesondere 20 bis 250 µm aufweisen. Die Breite soll zweckmäßigerweise zumindest der der extrudierten Schmelzebahn entsprechen kann jedoch auch breiter oder schmäler sein.

### Lackzusammensetzung für die elektrischleitfähige Beschichtung

Die Lackzusammensetzung, enthält Silicium-Oxid-Teilchen (SiO₂-Partikes) und anorganische Halbleiter-Teilchen, bevorzugt anorganisch dotierte-Zinn-Oxid- oder IndiumOxid-Teilchen, im Gewichts-Verhältnis von 1 zu 9 bis 9 zu 1.

Geeignete anorganische Halbleiter-Teilchen (elektrisch leitfähige Metall-Oxide) haben eine Primärteilchengröße im Bereich von 1 - 80 nm. Die anorganische Halbleiter-Teilchen können im undispergierten Zustand auch als Aggregate und Agglomerate von Primärteilchen und Aggregaten vorliegen und hierbei eine Teilchengröße der Agglomerate von bis zu 2000 oder bis zu 1000 nm aufweisen. Die Aggregate haben eine Größe von bis zu 500 nm, bevorzugt bis zu 200 nm.

Die mittlere Teilchengröße der anorganische Halbleiter-Teilchen bzw. der Metall-Oxid-Primärteilchen kann mit Hilfe des Transmissions-Elektronenmikroskops ermittelt werden und liegt bei den Primärteilchen im allgemeinen im Bereich von 5 bis 50, bevorzugt von 10 bis 40 und besonders bevorzugt von 15 bis 35 nm. Weitere geeignete Bestimmungsmethoden für die mittlere Teilchengröße sind die Brunauer-Emmett-Teller-Adsorptionsmethode (BET) oder die Röntgen-Diffraktometrie (XRD). Die Primärteilchen können als Aggregate oder als Agglomerate vorliegen. Unter Aggregaten versteht man Sekundärteilchen, die über Sinterbrücken dauerhaft zusammengefügt sind. Durch Dispergierprozesse sind Aggregate nicht trennbar.

Geeignete anorganische Halbleiter-Teilchen (Metall-Oxide) sind z. B. Antimon-Zinn-Oxid- oder Indium-Zinn-Oxid-Nanomaterialien (ITO), die eine besonders gute elektrische Leitfähigkeit aufweisen. Geeignet sind auch dotierte Varianten der qenannten Metall-Oxide. Entsprechende Produkte werden nach Fällungs-oder dem Sol-Gel-Verfahren in hoher Reinheit erhalten und sind von verschiedenen Herstellern kommerziell erhältlich. Die mittleren Primärteilchengrößen liegen im Bereich von 5 bis 80 nm. Die Produkte enthalten einen bestimmten Anteil von aus Einzelteilchen zusammengesetzten Aggregaten und Agglomeraten. Unter Agglomeraten versteht man durch Vander-Waals-Kräfte zusammengehaltene Sekundärteilchen, die durch Dispergierprozesse trennbar sind.

Bevorzugt werden kolloidal gelöste SiO₂ Partikel eingesetzt. Bevorzugt sind 1 -2 Gew.-% SiO₂ und 2,5 bis 7,5 Gew.-% weiterer anorganischer Partikeln in einem Lösemittel oder Lösemittelgemisch, das gegebenenfalls zusätzlich Verlaufhilfsmittel und Wasser enthalten. Das Verlaufhilfsmittel kann z. B. in einer Konzentration von 0,01 bis 2 bevorzugt 0,1 bis 1 Gew.-% enthalten sein.

Im Rahmen der vorliegenden Erfindung bedeutet der Begriff anorganisch, dass der Kohlenstoffanteil der anorganischen Beschichtung maximal 25 Gew.-%, vorzugsweise maximal 17 Gew.-% und ganz besonders bevorzugt maximal 10 Gew.-%, bezogen auf das Gewicht der anorganischen Beschichtung, beträgt. Diese Größe kann mittels Elementaranalyse bestimmt werden.

Organische Bindemittel, jedoch ausschließlich nicht polymerisierende organische Bindemittel, sind bevorzugt nicht, oder wenn überhaupt, nur in geringen, unkritischen Mengen enthalten.

Lackzusammensetzungen, die polymerisierende organische Komponenten gemäß der US 4,571,361 (Kawaguchi et al. Feb.18, 1986), insbesondere in Sinne des Wortlauts von Anspruch 1 der US 4,571,361 enthalten, sind ausgeschlossen bzw. ausgenommen. Es sind demnach Lackzusammensetzungen ausgeschlossen bzw. ausgenommen, die Inhaltsstoffe bzw. Substanzen enthalten, die ungesättigte Bindungen aufweisen, welche unter Einfluss von Bestrahlung polymerisieren bzw. einen Polymerisationsvorgang auslösen können. Ebenso sind in den Lackzusammensetzungen polymerisierende Bindemittel im Sinne der US 4,571,361 nicht enthalten bzw. ausgeschlossen bzw. ausgenommen, die Inhaltsstoffe bzw. Substanzen im Bindemittel enthalten, die ungesättigte Bindungen aufweisen, welche unter Einfluss von Bestrahlung polymerisieren bzw. einen Polymerisationsvorgang auslösen können.

Lackzusammensetzungen gemäß der US 4,571,361 sind für die Zwecke der Erfindung ungeeignet, da diese durch den Polymerisationsvorgang auf der Trägerfolie eine zu starke Haftung entfalten und im erfindungsgemäßen Verfahren praktisch nicht mehr auf den Polymerschmelzestrang transferierbar sind.

Gemäß einem weiteren Aspekt der vorliegenden Erfindung können auch Silankondensate eingesetzt werden, die kolloidal gelöste SiO₂-Partikel enthalten. Derartige Lösungen können nach dem Sol-Gel-Verfahren erhalten werden, wobei insbesondere Tetraalkoxysilane und/oder Tetrahalogensilane kondensiert werden.

Üblicherweise werden aus den zuvor genannten SiO₂-Verbindungen wasserhaltige Beschichtungsmittel dargestellt, indem man siliciumorganische Verbindungen, mit einer zur Hydrolyse ausreichenden Menge Wasser, d.h. > 0,5 Mol Wasser pro Mol der zur Hydrolyse vorgesehenen Gruppen, wie z.B. Alkoxygruppen hydrolysiert, vorzugsweise unter Säurekatalyse. Als Säuren können z.B. anorganische Säuren, wie Salzsäure, Schwefelsäure, Phosphorsäure, Salpetersäure usw., oder organische Säuren, wie Carbonsäuren, organische Sulfonsäuren usw., oder saure Ionenaustauscher zugesetzt werden, wobei der pH der Hydrolysereaktion in der Regel zwischen 2 und 4,5, vorzugsweise bei 3 liegt.

Die Beschichtungszusammensetzung enthält bevorzugt anorganische Teilchen in Form von 1 bis 2, bevorzugt 1,2 bis 1,8 Gew.-% SiO₂ und 2,5 bis 7,5, bevorzugt 3 bis 7, besonders bevorzugt 4 bis 6 Gew.-% Indium-Zinn-Oxid-Teilchen oder bevorzugterweise Antimon-Zinn-Oxid-Teilchen in Wasser als Lösemittel. Der pH-Wert ist bevorzugt alkalisch eingestellt, damit die Partikeln nicht agglomerieren. Die Teilchengröße dieser Oxid-Partikel ist unkritisch, wobei jedoch die Transparenz von der Partikelgröße abhängig ist. Bevorzugt weisen die Partikel höchstens eine Größe von 300 nm auf, wobei sie insbesondere in einem Bereich von 1 bis 200 nm, bevorzugt 1 bis 50 nm liegen. Die Kombination der SiO₂-Teilchen mit den Antimon-Zinn-Oxid-Teilchen führt im Vergleich zu Beschichtungen mit den Antimon-Zinn-Oxid-Teilchen allein offenbar in synergistischer Weise zu besonders gut elektrisch leitenden Beschichtungen.

Insbesondere kann die Lackzosammensetong zusätzlich ein Tensid oder Gemische von Tensides als Verlaufshilfsmittel enthalten.

Gemäß einem besonderen Aspekt der vorliegenden Erfindung wird die kolloidale Lösung vorzugsweise bei einem pH-Wert größer oder gleich 7,5, insbesondere größer oder gleich 8 und besonders bevorzugt größer oder gleich 9 aufgetragen.

Basische kolloidale Lösungen sind preiswerter als saure Lösungen. Darüber hinaus sind basische kolloidale Lösungen von Oxid-Partikel besonders einfach und über eine lange Zeit lagerfähig.

Die zuvor beschriebenen Lackzusammensetzungen bzw. Beschichtungsmittel können kommerziell unter dem Handelsnamen ®Ludox (Fa. Grace, Worms); ® Levasil (Fa. Bayer, Leverkusen); ®Klebosol, (Fa. Clariant) erhalten werden.

Bevorzugt ist auch um eine gute Verteilung der Partiklen zu begünstigen, zusätzlich das erwähnte Verlaufhilfsmittel enthalten, z. B. in einer Konzentration von 0,1 bis 1, bevorzugt 0,3 bis 0,5 Gew.-%.

Die Lackzusammensetzung kann vor Gebrauch aus einzelnen Komponenten, gemischt werden.

Man kann z. B. eine handelsübliche 10 bis 15 %-ige Antimon-Zinn-Oxid-Lösung bzw. Suspension in Wasser (Lösung 1) verwenden und diese mit einer gebrauchfähig eingestellten Kieselsol-Lösung (Lösung 2) und einer Verdünnungslösung (Lösung 3) mischen.

Die Kieselsol-Lösung kann zunächst in konzentrierter Form z. B. SiO₂ Partikeln im Größenbereich von 10 bis 100 nm, bevorzugt 7 bis 50 nm enthalten und in Form einer 20 bis 30 %-igen alkalisch eingestellten, wäßrigen Lösung bzw, Suspension vorliegen. Man kann die konzentrierte Lösung wiederum etwa 30 %-ig in H₂O als gebrauchsfähige Lösung (Lösung 2) einstellen. Bevorzugt setzt man ein Verteilungs- bzw. ein Verlaufshilfsmittel hinzu. Geeignet sind z. B. Tenside, bevorzugt ist der Zusatz von [Fettalkohol+3-Ethylenoxid, Genapol X 80],

Neben dem Verlaufshilfsmittel mit anionischen Gruppen kann die Beschichtungszusammensetzung weitere Verlaufshilfsmittel, zum Beispiel nichtionische Verlaufshilfsmittel umfassen. Hiervon sind insbesondere Ethoxylate bevorzugt, wobei insbesondere Ester sowie Alkohole und Phenole mit Ethoxygruppen eingesetzt werden können. Hierzu gehören unter anderem Nonylphenolethoxylate.

Die Ethoxylate umfassen insbesondere 1 bis 20, insbesondere 2 bis 8 Ethoxygruppen. Der hydrophobe Rest der ethoxylierten Alkohole und Ester umfasst vorzugsweise 1 bis 40, vorzugsweise 4 bis 22 Kohlenstoffatome, wobei sowohl lineare als auch verzweigte Alkohol- und/oder Esterreste eingesetzt werden können.

Derartige Produkte können kommerziell beispielsweise unter dem Handelsnamen ®Genapol X80 erhalten werden.

Die Zugabe an nichtionischem Verlaufshilfsmittel ist auf eine Menge beschränkt, die im wesentlichen keine nachteilige Wirkung auf die antistatische Beschichtung zeigt. Im allgemeinen wird der Beschichtungszusammensetzung 0,01 bis 4 Gew.-, insbesondere 0,1 bis 2 Gew.-% eines oder mehrerer nichtionischer Verlaufshilfsmittel zugegeben, bezogen auf das Gesamtgewicht der Beschichtungszusammensetzung.

Als Verdünnungmittel (Lösung 3) kann man vollentmineralisiertes H₂0 (VE-Wasser), das mit NaOH auf etwa pH 9,0 eingestellt wurde verwenden. Zweckmäßiger Weise kann auch hier ein Verlaufshilfsmittel enthalten sein.

Verlaufshilfsmittel mit mindestens einer anionischen Gruppe sind in der Fachwelt bekannt, wobei diese Verlaufshilfsmittel im allgemeinen Carboxy-, Sulfonat- und/oder Sulfatgruppen aufweisen. Vorzugsweise umfassen diese Verlaufshilfsmittel mindestens eine Sulfonatgruppe. Verlaufshilfsmittel mit mindestens einer anionischen Gruppe umfassen anionische Verlaufshilfmittel und amphotere Verlaufshilfsmittel, die neben einer anionischen Gruppe auch eine kationische Gruppe umfassen. Hiervon sind anionische Verlaufshilfsmittel bevorzugt. Mit anionischen Verlaufshilfmitteln ist insbesondere die Herstellung von umformbaren Kunststoffkörpern möglich.

Vorzugsweise umfassen die Verlaufshilfsmittel mit mindestens einer anionischen Gruppe 2 bis 20, besonders bevorzugt 2 bis 10 Kohlenstoffatome, wobei der organische Rest sowohl aliphatische als auch aromatische Gruppen enthalten kann. Gemäß einem besonderen Aspekt der vorliegenden Erfindung werden anionische Verlaufshilfsmittel eingesetzt, die einen Alkyl- oder einen Cycloalkylrest mit 2 bis 10 Kohlenstoffatome umfassen.

Die Verlaufshilfsmittel mit mindestens einer anionischen Gruppe können weitere polare Gruppen, beispielsweise Carboxy-, Thiocarboxy- oder Imino-, Carbonsäureester-, Kohlensäureester-, Thiocarbonsäureester, Dithiocarbosäureester- Thiokohlensäureester-, Dithiokohlensäureester-und/oder Dithiokohlensäureamidgruppen aufweisen.

Besonders bevorzugt werden Verlaufshilfsmittel der Formel (I) eingesetzt 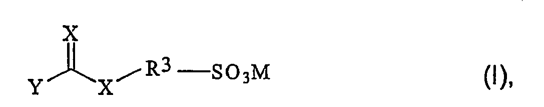 worin X unabhängig ein Sauerstoff oder ein Schwefelatom, Y eine Gruppe der Formel OR², SR² oder NR², worin R² unabhängig eine Alkylgruppe mit 1 bis 5, vorzugsweise 1 bis 3 Kohlenstoffatomen und R³ eine Alkylengruppe mit 1 bis 10, vorzugsweise 2 bis 4 Kohlenstoffatomen und M ein Kation, insbesondere ein Alkalimetallion, insbesondere Kalium oder Natrium, oder ein Ammoniumion darstellt.

Im allgemeinen wird der Beschichtungszusammensetzung 0,01 bis 1 Gew.-, insbesondere 0,03 bis 0,1 Gew.-% eines oder mehrerer Verlaufshilfsmittel mit mindestens einer anionischen Gruppe zugegeben, bezogen auf das Gesamtgewicht der Beschichtungszusammensetzung.

Derartige Verbindungen können insbesondere von Raschig AG unter dem Handelsnamen Raschig OPX® oder Raschig DPS® erhalten werden und z. B. in einer Konzentration von 0,1 bis 1, bevorzugt 0,4 bis 0,6 Gew.-% enthalten sein.

Um eine einsatzbereite Beschichtungszusammensetzung zu erhalten mischt man bevorzugt zunächst die Lösungen 2 und 3, Z. B. im Verhältnis 1 zu 1 bis 1 zu 2, z. B. 1 zu 1,5, und das Gemisch dann mit Lösung 1, im Verhältnis von etwa 1 zu 1.

### Trocknen der Lackzusammensetzung auf der Trägerfolie

Nach der Beschichtung der Trägerfolie mittels Rakeln, Fluten, Tauchen oder kontinuierliches Beschichten trocknet man die Lackzusammensetzung. Dies kann z. B. im Temperaturbereich von 50 bis 200, bevorzugt von 80 bis 120 °C geschehen, wobei die Temperatur der Temperaturbeständigkeit der Trägerfolie anzupassen ist. In der Regel ist eine Trocknungszeit von 0,1 bis 5, bevorzugt 2 bis 4 Stunden ausreichend, um eine nahezu vollständig ausgehärtete Beschichtung zu erhalten. Man kann nach der Trockenphase noch eine Standphase, z. B. 12 bis 24 Stunden bei Raumtemperatur, anschließen, um eine vollständige Aushärtung zu gewährleisten, bevor die Trägerfolie weiterverwendet wird.

Da die Lackschicht aus einer Lösung entstanden ist, die einen Feststoffanteil aus anorganischen Partikeln aufweist, besteht die Beschichtung aus einem kontinuierlichen dreidimensionalen Netzwerk, das aus kugelartigen Strukturen aufgebaut ist und zwangläufig einen gewissen Hohlraumanteil aufweist. Dieser Strukturaufbau ist im Prinzip aus der EP-A 0 193 269 bekannt.

### Verfahrenschritt b)

Der Verfahrensschritt b) umfasst das Extrudieren eines Schmelzestrangs eines thermoplastischen Kunststoffs, der die gleiche oder eine niedrigere Erweichungstemperatur wie der thermoplastische Kunststoff der Trägerfolie aufweist, auf einer Extrusionsanlage durch eine Breitschlitzextrusionsdüse für Platten oder Folien mit anschließendem Walzenglättwerk.

### Extrudierter Kunststoff

Der extrudierte thermoplastische Kunststoff ist bevorzugt amorpher thermoplastischer Kunststoff, insbesondere ein Polymethylmethacrylat-Kunststoff, schlagzäh modifiziertes Polymethylmethacrylat, ein Polycarbonat-Kunststoff, ein Polystyrol-Kunststoff, ein Styrol-Acryl-Nitril-Kunststoff, Polyvinylchlorid-Kunststoff, transparenter Polyolefin-Kunststoff, Acrylnitril-Butadien-Stryrol (ABS)-Kunststoff oder eine Mischung (Blends) verschiedener thermoplastischer Kunststoffe.

Besonders bevorzugt ist der extrudierte amorphe thermoplastische Kunststoff ein Polymethylmethacrylat-Kunststoff mit einer Vicaterweichungstemperatur im Bereich von 85 bis 110 °C wobei zugleich eine Walzentemperatur im Bereich von 80 bis 140 °C angewendet wird.

Unter Polymethylmethacrylat-Kunststoffen werden Homopolymere oder Copolymere aus mindestens 80 Gew.-% Methylmethacrylat und gegebenenfalls bis zu 20 Gew.-% weiteren mit Methylmethacrylat copolymerisierbaren Monomeren verstanden. Insbesondere bestehen Polymethylmethacrylat-Kunststoffe aus 80 bis 100, vorzugsweise zu 90 - 99,5 Gew.-%, aus radikalisch polymerisierten Methylmethacrylat-Einheiten und gegebenenfalls zu 0 - 20, bevorzugt zu 0,5 - 10 Gew.-% aus weiteren radikalisch polymerisierbaren Comonomeren, z. B. C₁- bis C₄-Alkyl(meth)acrylaten, insbesondere Methylacrylat, Ethylacrylat oder Butylacrylat. Vorzugsweise liegt das mittlere Molekulargewicht M_{w} (Gewichtsmittel) der Matrix im Bereich von 90.000 g/mol bis 200.000 g/mol, insbesondere 100.000 g/mol bis 150.000 g/mol (Bestimmung von M_{w} mittels Gelpermeationschromatographie unter Bezug auf Polymethylmethacrylat als Eichstandard) entsprechen. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Bevorzugt ist ein Copolymer aus 90 bis 99,5 Gew.-% Methylmethacrylat und 0,5 bis 10 Gew.-% Methylacrylat. Die Vicaterweichungstemperaturen VET (ISO 306-B50) können im Bereich von mindestens 90, bevorzugt von 95 bis 112 °C liegen.

### Coextrusion

In Einzelfällen kann eine nochmals verbesserte Haftung bzw. Dauerhaftigkeit der elektrisch leitfähigen Beschichtung wünschenswert sein. Limitierend kann hierfür der verwendete thermoplastisch Kunststoff sein. In diesem Fall kann auf den in Frage kommenden Kunststoff mittels Coextrusion eine weitere Schicht eines anderen thermoplastischen Kunststoffs auf der für die Übertragung der elektrisch leitfähigen Beschichtung vorgesehenen Seite aufgebracht werden. Auf diese Weise kann auf einen ersten Kunststoff, bei dem eine bestimmte Haftung bzw. Dauerhaftigkeit der elektrisch leitfähigen Beschichtung aufgrund der Materialeigenschaften für einen bestimmten Anwendungszweck nicht erreicht wird, eine Schicht eines zweiten Kunststoffs aufgebracht werden, die eine bessere Haftung bzw. Dauerhaftigkeit der elektrisch leitfähigen Beschichtung zulässt und so die erhöhten Anforderungen erfüllt. Eine besonders gute Übertragung bzw. Haftung der elektrisch leitfähigen Beschichtung wird insbesondere bei Kunststoffen mit einer Vicaterweichungstemperatur kleiner/gleich 120 °C erzielt. Kunststoffe die in diesen Bereich fallen, sind daher besonders gut als Coextrusionsschichten auf Kunststoff mit Vicaterweichungstemperatur größer 120 °C geeignet.

Die jeweiligen Kunststoffkombinationen sollen dabei eine ausreichende Haftung zueinander aufweisen. Die Haftung zwischen beiden Schichten kann mittels einer Universalprüfmaschine (Zugprüfmaschine) gemessen werden, indem die beiden Schichten in einer 180° T-Peel-Test Konfiguration von einander getrennt werden. Dazu werden die Proben vorher 16 Stunden bei 23 °C und 50 % relativer Feuchte konditioniert. Die Prüfung erfolgt unter gleichen Bedingungen. Dem Fachmann bzw. dem Analytiker ist der 180° T-Peel-Test bekannt. Die Probenbreite des streifenförmigen Prüfkörpers beträgt 15 mm. Die Prüfgeschwindigkeit beträgt 100 mm/min. Ermittelt wird die mittlere Kraft während der fortlaufenden Trennung der beiden Schichten. Eine ausreichende Haftung von coextrudierten Schichten kann z. B. dann vorliegen, wenn Werte von größer/gleich 1, größer/gleich 5, größer/gleich 15 oder größer/gleich 30 N für diese Abzugskraft gemessen werden.

### Extrusionsanlage

Die Extrusionsanlage umfasst insbesondere eine Breitschlitzextrusionsdüse für Platten oder Folien und ein anschließendes Walzenglättwerk.

Unter Extrusionsanlage wird u.a. ein Extruder verstanden, in dem der Kunststoff für die Folien oder Platten im Form von Granulat zunächst geschmolzen und als Schmelze mittel einer Schneckenförderung in die Breitschlitzextrusionsdüse gefördert wird. In der Breitschlitzextrusionsdüse wird die Kunststoffschmelze in die Breite verteilt bevor die Schmelze als Schmelzestrang wieder aus der Breitschlitzextrusionsdüse austritt. Hierbei können in an sich bekannter Weise die für den jeweiligen Kunststoff geeigneten Verfahrensbedingungen, Temperaturen und Fördermengen angewendet werden bzw. innerhalb der fachmännischen Routine angepasst werden. Entsprechende Extrusionsanlagen sind hinlänglich bekannt (s. DE-OS 37 41 793, EP 0 418 681 A2).

Der austretende Schmelzestrang wird in einem Glättwerkspalt aufgenommen, der von zwei gegenüberliegenden Walzen, dem Walzenglättwerk, gebildet wird. Da der Glättwerkspalt enger als der Schmelzestrang eingestellt wird, wird dieser im Walzenspalt unter Druck geglättet. Die Walzen haben zugleich die Funktion den Schmelzestrang kontrolliert abzukühlen und sind daher in der Regel temperiert. Hinter dem Glättwerkspalt kann sich eine sogenannte Kalibrierung anschliessen, die den Schmelzestrang bis unter die Erweichungstemperatur abkühlt. Kalibriereinrichtungen sind bekannt z. B. aus DE-C 32 44 953 (= EP-B 0 158 951) oder aus DE 198 04 235 (= EP-A 0 936 052). Der kontinuierlich austretende Strang als Folie aufgewickelt werden oder bei Platten entsprechend abgelängt werden.

### Verfahrenschritt c)

Der Verfahrensschritt c) umfasst das Zusammenbringen der beschichteten Seite der Trägerfolie mit dem Schmelzestrang des extrudierten thermoplastischen Kunststoffs im Walzenspalt des Glättwerks und bei einer Walzentemperatur die um nicht mehr als 5 °C unter der Vicaterweichungstemperatur des extrudierten thermoplastischen Kunststoffs liegt, bevorzugt über der Vicaterweichungstemperatur des extrudierten thermoplastischen Kunststoffs liegt, wodurch ein Verbund der beschichteten Trägerfolie mit dem Schmelzestrang entsteht.

Das Zusammenbringen der beschichteten Seite der Trägerfolie mit dem Schmelzestrang des extrudierten thermoplastischen Kunststoffs im Walzenspalt des Glättwerks erfolgt durch Einlaufenlassen der Trägerfolie in den Spalt. Durch die Spaltkräfte werden die Trägerfolie an der beschichteten Seite mit einer Seite des Schmelzestrangs im Spalt unter Druck zusammengepresst. Auf diese Weise entsteht ein Verbund der beschichteten Trägerfolie mit dem Schmelzestrang.

Der Schmelzestrang kann bei Austritt aus der Breitschlitzextrusionsdüse eine Temperatur z. B. im Bereich von 200 bis 280 °C aufweisen. Das Glättwerk, bzw. die Walzentemperatur, d.h. die Temperatur entweder beider Glättwerkwalzen oder zumindest der Walze auf Seite der einlaufenden Trägerfolie, ist auf eine Temperatur eingestellt, die um nicht mehr als 5 °C unter der Vicaterweichungstemperatur des extrudierten thermoplastischen Kunststoffs liegt. Bevorzugt liegt die Temperatur der Walze auf der Seite der einlaufenden Trägerfolie bzw. beider Walzen bei mindestens der Temperatur, die der Vicaterweichungstemperatur des extrudierten thermoplastischen Kunststoffs entspricht oder um 5, 10, 15, 20 oder 30 °C oder um 5 bis 30 °C darüber liegt. Im Falle, dass nur die Temperatur der Walze auf Seite der einlaufenden Trägerfolie angepasst wird, soll die gegenüberliegende Walze bevorzugt eine um nicht mehr als 30 °C differierende Temperatur zu der erfindungsgemäß temperierten Walze aufweisen. Bei der Extrusion von Folien mit einer Dicke von weniger als 1 mm, z. B. 50 bis 500 µm, werden bevorzugt beide Glättwerkwalzen entsprechend temperiert. Bei Platten mit einer Dicke von 1 mm oder mehr ist die Temperatur der Walze auf Seite des einlaufenden Schmelzestranges insgesamt weniger kritisch. Durch die Temperierung des Glättwerks bzw. der Walzentemperatur des Glättwerks wird der Schmelzestrang in einem klebrigen Zustand gehalten, bei dem sich die Polymere vermutlich teilweise mit der elektrisch leitenden Schicht der Trägerfolie verschlaufen. Diese Verbindung ist insgesamt stärker als die Haftkraft der elektrisch leitenden Schicht auf der Trägerfolie.

### Verfahrensschritt d)

Im Verfahrensschritt d) erfolgt das Abziehen der Trägerfolie vom Verbund bei einer Schmelzetemperatur die mindestens 10°C, bevorzugt um 20 bis 50 °C unter der Vicaterweichungstemperatur des extrudierten thermoplastischen Kunststoffs liegt. Die Beschichtung der Trägerfolie verbleibt dabei auf dem extrudierten thermoplastischen Kunststoff bzw. geht auf diesen über.
Die oben genannten Temperaturen liegen unmittelbar nach dem Walzenspalt oder sowie in einem gewissen Abstand zum Walzenspalt vor. Die Trägerfolie kann unmittelbar nach dem Glättwerk oder bevorzugt in erst in einem gewissen Abstand zum Glättwerk bzw. zum Walzenspalt erfolgen. Die Trägerfolie kann z. B. in einem Anstand von 10 bis 100 cm hinter dem Walzenspalt über eine Umlenkwalze abgezogen werden, wenn die Schmelzetemperatur um etwa 20 bis 50 °C unter der Vicaterweichungstemperatur des extrudierten thermoplastischen Kunststoffs liegt. Ein Abziehen in diesem Bereich bzw. Temperaturbereich ist vorteilhaft für die Prozesssicherheit. Gegebenenfalls kann die Folie jedoch auch noch von der abgekühlten Folien- oder Plattenbahn abgezogen werden.

### Verfahrensschritt e)

Im Verfahrensschritt e) erfolgt das Abkühlen der Kunststoffbahn auf Umgebungs- oder Raumtemperatur, z. B. auf weniger als 50 °C, 20 bis 40 °C, sofern dies noch nicht in Schritt d) geschehen ist. Es werden so Folien oder Platten mit elektrisch leitfähiger Beschichtung erhalten, wobei sich z. B. ein Konfektionierungsschritt durch Aufwickeln der Folie oder Ablängen der Platten zu handelsüblichen Maßen anschließen kann.

### Zweiseitige Beschichtung

Die Beschichtung kann bei Bedarf auch zweiseitig ausgeführt werden, indem man auf beiden Seiten des Glättwerkspaltes, quasi spiegelbildlich, entsprechend beschichtete Trägerfolien einlaufen lässt und die Schichten beidseitig auf den Schmelzestrang transferiert.

### Folien und Platten

Die Erfindung betrifft eine extrudierte Folie oder Platte, herstellbar nach dem erfindungsgemäßen Verfahren, dadurch gekennzeichnet, dass sie aus einem thermoplastisch Kunststoff besteht und eine elektrisch leitfähige Beschichtung mit einem Oberflächenwiderstand von kleiner/gleich 10¹⁰ Ω aufweist, wobei der Oberflächenwiderstand nach einer Scheuertestbelastung gemäß DIN 53 778 von 5.000 Zyklen um nicht mehr als eine Zehnerpotenz zunimmt.

Folien können z. B. eine Dicke im Bereich von 50 µm bis < 1 mm, insbesondere 60 bis 250 µm aufweisen.

Platten können z. B. eine Dicke im Bereich von 1 mm bis 200 mm, insbesondere 3 bis 30 mm aufweisen.
Übliche Abmessungen für Folien Platten in der Breite und Länge liegen im Bereich von 500 bis 2000 x 2000 bis 6000 mm (Breite x Länge).

Die anorganische Beschichtung kann je nach Einsatzzweck ein- oder mehrseitig erfolgen.

Der nach dem erfindungsgemäßen Verfahren erhältliche Kunststoffkörper weist eine elektrisch leitfähige Beschichtung mit einem Oberflächenwiderstand von kleiner 10¹⁰ Ω, bevorzugt größer/gleich 10⁹ kleiner 10¹⁰ Ω, besonders bevorzugt größer/gleich 10⁸ kleiner 10⁹ Ω, insbesondere größer/gleich 10⁷ kleiner 10⁸ Ω, spezieller Weise größer/gleich 10⁶ kleiner 10⁷ Ω auf. Die Bestimmung des Oberflächenwiderstands der Beschichtung kann z. B. nach DIN EN 613402 /IEC 61340 mit einem Ohmmeter der Fa. Wolfgang Warmbier, Modell SRM-110 durchgeführt werden. Der Oberflächenwiderstand wird an solchen Messgeräten in der Regel mit einem Wert z. B. kleiner 10¹⁰ Ω angezeigt, was bedeutet größer/gleich 10⁹ aber kleiner 10¹⁰ Ω.

Ein Tyndall-Effekt, der auf eine Trübung hinweist ist nicht erkennbar. Regenbogen-Interferenzeffekte, die auf eine ungleichmäßige Schichtverteilung hindeuten, sind auf den beschichteten Oberflächen kaum oder gar nicht auszumachen.

Der Kunststoffkörper besteht bevorzugt aus einem Polymethylmethacrylat, d. h. einem Polymerisat, das überwiegend aus Methylmethacrylat aufgebaut ist, oder einem Polystyrol. Der Kunststoff kann Zusatz und Hilfsstoffe wie Schlagzähmodifizierer, Pigmente, Füllstoffe, und UV-Absorber. enthalten. Der Kunststoffkörper kann auch transluzent oder transparent sein.

Die Schichtdicke der elektrisch leitfähigen Beschichtung liegt im Bereich von 200 - 5000, bevorzugt 250 bis 1000, besonders bevorzugt im Bereich von 300 bis 400 nm.

Die Folie oder Platte weist auf der anorganisch beschichteten, elektrisch leitfähigen Fläche nach einer Scheuertestbelastung gemäß DIN 53 778 von 5.000 Zyklen einen Oberflächenwiderstand auf, der um nicht mehr als eine Zehnerpotenz zunimmt. Insbesondere können nach Scheuertestbelastung Werte von z. B. nicht mehr als größer/gleich 10¹⁰ kleiner 10¹¹ Ω, bevorzugt nicht mehr als größer/gleich 10⁹ kleiner 10¹⁰ Ω, besonders bevorzugt nicht mehr als größer/gleich 10⁸ kleiner 10⁹ Ω, insbesondere nicht mehr als größer/gleich 10⁷ kleiner 10⁸ Ω, ganz besonders bevorzugt nicht mehr als größer/gleich 10⁶ kleiner 10⁷ Ω. erhalten werden.

Die Bestimmung der Haftung der Beschichtung gemäß dem Nassscheuertest nach DIN 53778 kann z. B. mit einem Nassscheuertestgerät der Fa. Gardner, Modell M 105/A durchgeführt werden.

Erfindungsgemäße Folien oder Platten können z. B. für Einhausungen, für die Ausstattung, bzw. Laminierfolien, in Reinräumen, z. B. in mikrobiologischen Laboratorien, in Krankenhäusern oder Raümen für die Waver- oder Computerchipherstellung, für Maschinenabdeckungen, für Inkubatoren, für Displays, für Bildschirme und Bildschirmabdeckungen, für Rückprojektionsschirme, für medizinische Apparaturen und für Elektrogeräte verwendet werden.

Insbesondere definert Anspruch 10 die Verwendung von Folien oder Platten.

Die erfindungsgemäße Folie oder Platte kann auf der, der elektrisch leitfähigen Beschichtung gegenüberliegenden Seite mit weiteren Schichten versehen sein.

Die weiteren Schichten können nachträglich durch Lackieren oder Extrusionsbeschichtung oder auch während des erfindungsgemäßen Extrusionsvorgangs durch Lamination oder Coextrusion aufgebracht werden. Die weiteren Schichten können zusätzlich zur elektrischen Leitfähigkeit weitere Funktionalitäten bereitstellen, z. B. Einfärbung, Kratzfestigkeit oder mechanische Festigkeit.

### Vorteilhafte Wirkungen der Erfindung

Das erfindungsgemäße Verfahren ermöglicht die kontinuierliche Herstellung von Folien oder Platten im Extrusionsverfahren mit elektrisch leitfähiger Beschichtung. Die Folien oder Platten unterscheiden bezüglich der inneren Struktur der elektrisch leitfähigen Beschichtung von den Beschichtungen des Standes der Technik, da in Folge des innigen Kontaktes der Beschichtung mit dem Extrudat im Schmelzezustand molekulare Verschlaufungen oder Durchsetzungen stattfinden. Die Beschichtung ist daher sehr abriebfest.

Die vom beschichteten Substrat auf den polymeren Kunststoffkörper während dessen Polymerisation transferierte Beschichtung ist von hoher Qualität. Ein Tyndall-Effekt, der auf Trübungen hinweisen würde ist nicht erkennbar. Regenbogen-Interferenzeffekte, die auf eine ungleichmäßige Schichtverteilung hindeuten, sind auf der beschichteten Oberfläche kaum oder gar nicht auszumachen. Die Abriebfestigkeit ist akzeptabel bis gut.

### Beispiele

### Beispiel 1 (erfindungsgemäß)

25 Gewichtsteile eines anionischen Kieselsols (Feststoffgehalt 30 %; ®Levasil erhältlich von Bayer AG) wurden mit 0,4 Gewichtsteile eines ethoxylierten Fettsäurealkohols (®Genapol X80) mit vollentsalztem Wasser zu 100 Gewichtsteilen ergänzt und mit einer Lösung, bestehend aus 0,5 Gewichtsteile (O-Ethyl-dithiokohlensäure-(3-sulfopropyl)-ester, Kaliumsalz; ®Raschig OPX erhältlich von Raschig AG) mit wässriger NaOH-Lösung bei einem pH-Wert von 9,5 zu 100 Gewichtsteilen ergänzt, im Verhältnis 1 : 1,5 gemischt. 50 Gewichtsteile dieser ersten Lösung wurden mit 50 Gewichtsteilen einer Antimon-Zinn-Oxid-Lösung (12 % ig in Wasser; erhältlich von Leuchtstoffwerk Breitungen GmbH) gemischt.

Anschließend wurde der daraus resultierende Lack im Handrakelverfahren auf eine 50 µm dicke Folie aus Polyethylenterephtalat (PET, ® Melinex 401 erhältlich von Du Pont Teijin Films) beschichtet. Die Folie zeigte nach der Beschichtung auf der beschichteten Seite einen Oberflächenwiderstand <10⁷ Ω.

Die so hergestellte Folie wurde anschließend während der Herstellung einer 3 mm dicken Platte aus Polymethylmethacrylat (PMMA, Copolymer aus 96 Gew.% Methylmethacrylat und 4 Gew.-% Methylacrylat, Vicaterweichungstemperatur 103°C gemäß Campus 4.5, gemessen bei 10°C/min) auf einer Extrusionsanlage mit Breitschlitzdüse zusammen mit dem extrudierten PMMA in den Glättwerkspalt eingeführt, wobei die beschichtete Seite dem PMMA zugewandt wurde. Die Breitschlitzdüse wurde auf 260 °C temperiert. Die den Glättspalt bildenden Walzen wiesen einen Durchmesser von 100 mm auf und wurden auf 110°C temperiert. Die resultierenden Platten wurden mit einer Abzugsgeschwindigkeit von 0,5 m/min abgezogen. Nachdem der Verbund Raumtemperatur erreicht hatte, wurde die Trägerfolie aus PET wieder abgezogen. Die Beschichtung war von der Folie auf die PMMA-Platte übergegangen. Die Platte zeigte nach der Beschichtung auf der beschichteten Seite einen Oberflächenwiderstand von größer/gleich 10⁶ und kleiner 10⁷ Ω.

Die so beschichteten Platten wurden anschließend dem Nassscheuertest nach DIN 53778 unterzogen und wiesen auch nach 5.000 Zyklen noch immer einen Oberflächenwiderstand größer/gleich 10⁷ und kleiner 10⁸ Ω auf.

Die Platte zeigte gute optische Eigenschaften.

### Vergleichsbeispiel 1

Das Beispiel 1 wurde wiederholt, wobei jedoch diesmal die Temperatur der Glättwerkswalzen auf 90°C reduziert wurde. Die Platte zeigte nach der Beschichtung auf der beschichteten Seite einen Oberflächenwiderstand von größer/gleich 10⁶ und kleiner 10⁷ Ω und eine mit Beispiel 1 vergleichbar gute optische Qualität.

Die Haftung der Beschichtung erwies sich als weniger dauerhaft als in Beispiel 1 und wies nach 5.000 Zyklen einen Oberflächenwiderstand von größer/gleich 10⁸ und kleiner 10⁹ Ω auf.

### Beispiel 2 (erfindungsgemäß)

Das Beispiel 1 wurde wiederholt, wobei jedoch diesmal die Temperatur der Breitschlitzdüse auf 240°C reduziert wurde. Die Platte zeigte nach der Beschichtung auf der beschichteten Seite einen Oberflächenwiderstand größer/gleich 10⁶ und kleiner 10⁷ Ω und eine mit Beispiel 1 vergleichbar gute optische Qualität.

Die Haftung der Beschichtung erwies sich als vergleichbar dauerhaft zu Beispiel 1 und wies nach 5.000 Zyklen ebenfalls einen Oberflächenwiderstand größer/gleich 10⁷ und kleiner 10⁸ Ω auf.

### Vergleichsbeispiel 2

Das Beispiel 2 wurde wiederholt, wobei jedoch diesmal die Temperatur der Glättwerkswalzen auf 90°C reduziert wurde. Die Platte zeigte nach der Beschichtung auf der beschichteten Seite einen Oberflächenwiderstand größer/gleich 10⁶ und kleiner 10⁷ Ω und eine mit Beispiel 1 vergleichbar gute optische Qualität.

Die Haftung der Beschichtung erwies sich als deutlich weniger dauerhaft als in Beispiel 2 und wies bereits nach 200 Zyklen einen Oberflächenwiderstand größer/gleich 10¹⁰ und kleiner 10¹¹ Ω auf.

## Patentansprüche

1. Verfahren zur Herstellung von Folien oder Platten aus thermoplastischem Kunststoff mit elektrisch leitfähiger Beschichtung mittels der Verfahrensschritte
a) Einseitiges Beschichten einer Trägerfolie aus einem thermoplastischen Kunststoff mit einer Lackzusammensetzung auf Basis von Silicium-Oxid-Teilchen und anorganischen Halbleiter-Teilchen in einem Lösemittel oder einem Lösemittelgemisch, das gegebenenfalls zusätzlich ein Verlaufshilfsmittel enthalten kann, mittels Rakeln, Fluten oder Tauchen oder kontinuierlicher Beschichtung und anschließendem Trocknen der Beschichtung,
b) Extrudieren eines Schmelzestrangs eines thermoplastischen Kunststoffs, der die gleiche oder eine niedrigere Erweichungstemperatur wie der thermoplastische Kunststoff der Trägerfolie aufweist, auf einer Extrusionsanlage durch eine Breitschlitzextrusionsdüse für Platten oder Folien mit anschließendem Walzenglättwerk,
c) Zusammenbringen der beschichteten Seite der Trägerfolie mit dem Schmelzestrang des extrudierten thermoplastischen Kunststoffs im Walzenspalt des Glättwerks und bei einer Walzentemperatur die um nicht mehr als 5°C unter der Vicaterweichungstemperatur des extrudierten thermoplastischen Kunststoffs liegt, wodurch ein Verbund der beschichteten Trägerfolie mit dem Schmelzestrang entsteht
d) Abziehen der Trägerfolie vom Verbund bei einer Schmelzetemperatur die mindestens 5°C unter der Vicaterweichungstemperatur des extrudierten thermoplastischen Kunststoffs liegt, wobei die Beschichtung der Trägerfolie auf dem extrudierten thermoplastischen Kunststoff verbleibt
e) Abkühlen der Kunststoffbahn auf Umgebungs- oder Raumtemperatur, sofern dies noch nicht in Schritt d) geschehen ist.

2. Verfahren nach Anspruch 1, **dadurch gekennzeichnet, daß als Silicium-Oxid-Teilchen** kolloidal gelöste SiO₂ Partikel eingesetzt werden.

3. Verfahren nach Anspruch 1 oder 2, **dadurch gekennzeichnet, dass** die Lackzusammensetzung 1 bis 2 Gew.-% SiO₂-Partikel und 2,5 bis 7,5 Gew.-% Antimon-Zinn-Oxid-Teilchen in Wasser als Lösemittel enthält.

4. Verfahren nach einem oder mehreren der Ansprüche 1 bis 3, **dadurch gekennzeichnet, dass** die Lackzusammensetzung zusätzlich ein Tensid oder Gemische von Tensiden als Verlaufshilfsmittel enthält.

5. Verfahren nach einem oder mehreren der Ansprüche 1 bis 4, **dadurch gekennzeichnet, dass** die Trägerfolie aus einem Polyamid, Polycarbonat, Polystyrol, Polyester, beispielsweise Polyethylenterephtalat (PET), die auch mit Glykol modifiziert sein können, Polybutylenterephtalat (PBT), cycloolefinischen Copolymeren (COC), Acrylnitril/Butadien/Styrol-Copolymeren und/oder einem Poly(meth)acrylat besteht.

6. Verfahren nach einem oder mehreren der Ansprüche 1 bis 5, **dadurch gekennzeichnet, dass** der extrudierte thermoplastische Kunststoff ein Polymethylmethacrylat-Kunststoff, schlagzäh modifiziertes Polymethylmethacrylat, ein Polycarbonat-Kunststoff, ein Polystyrol-Kunststoff, ein Styrol-Acry-nlitril-Kunststoff, Polyvinylchlorid-Kunststoff, Polyolefin-Kunststoff, Acrylnitril-Butadien-Stryrol (ABS)-Kunststoff oder eine Mischung (Blend) verschiedener thermoplastischer Kunststoffe ist.

7. Verfahren nach einem oder mehreren der Ansprüche 1 bis 6, **dadurch gekennzeichnet dass** der extrudierte thermoplastische Kunststoff ein Polymethylmethacrylat-Kunststoff mit einer Vicaterweichungstemperatur im Bereich von 85 bis 110 °C ist und die Walzentemperatur im Bereich von 80 bis 140 °C liegt.

8. Extrudierte Folie oder Platte, herstellbar nach einem Verfahren nach einem oder mehreren der Ansprüche 1 bis 7, **dadurch gekennzeichnet, dass** sie aus einem thermoplastisch Kunststoff besteht und eine elektrisch leitfähige Beschichtung mit einem Oberflächenwiderstand von kleiner 10¹⁰ Q aufweist, wobei der Oberflächenwiderstand nach einer Scheuertestbelastung gemäß DIN 53 778 von 5.000 Zyklen um nicht mehr als eine Zehnerpotenz zunimmt.

9. Folie oder Platte nach Anspruch 8, **dadurch gekennzeichnet, daß** die Schichtdicke der elektrisch leitfähigen Beschichtung im Bereich von 200 bis 5000 nm liegt.

10. Verwendung des von Folien oder Platten nach einem oder mehreren der Ansprüche 8 bis 9 für Einhausungen, für Ausstattungen, bzw. für Laminierfolien zum Kaschieren von Einrichtungsgegenständen zur Verwendung in Reinräumen, für Maschinenabdeckungen, für Inkubatoren, für Displays, für Bildschirme und Bildschirmabdeckungen, für Rückprojektionsschirme, für medizinische Apparaturen und für Elektrogeräte.

## Claims

1. Process for production of foils or sheets composed of thermoplastic with electrically conductive coating by means of the following steps of a process
a) single-side coating of a backing foil composed of a thermoplastic with a lacquer composition based on silicon oxide particles and on inorganic semiconductor particles in a solvent or a solvent mixture which, if appropriate, can also comprise a flow aid, by means of doctoring, flow coating, or dipping or continuous coating, and then drying of the coating,
b) extrusion of an extrudate of a thermoplastic whose softening point is the same as, or lower than, that of the thermoplastic of the backing foil, on an extrusion plant via a slot extrusion die for sheets or foils with downstream polishing-roll stack,
c) bringing the coated side of the backing foil and the extrudate of the extruded thermoplastic together in the nip of the polishing stack and at a roll temperature which is not more than 5°C below the Vicat softening point of the extruded thermoplastic, thus producing a composite of the coated backing foil with the extrudate,
d) peeling of the backing foil from the composite at a melt temperature which is below the Vicat softening point of the extruded thermoplastic by at least 5°C, whereupon the coating of the backing foil remains on the extruded thermoplastic,
e) cooling of the plastics web to ambient or room temperature, if this has not previously occurred in step d).

2. Process according to Claim 1, **characterized in that** a colloidal solution of SiO₂ particles is used as silicon oxide particles.

3. Process according to Claim 1 or 2, **characterized in that** the lacquer composition comprises from 1 to 2% by weight of SiO₂ particles and from 2.5 to 7.5% by weight of antimony tin oxide particles in water as solvent.

4. Process according to one or more of Claims 1 to 3, **characterized in that** the lacquer composition also comprises a surfactant or a mixture of surfactants as flow aid.

5. Process according to one or more of Claims 1 to 4, **characterized in that** the backing foil is composed of a polyamide, polycarbonate, polystyrene, polyester, such as polyethylene terephthalate (PET), where these can also have been modified with glycol, polybutylene terephthalate (PBT), cyclo-olefinic copolymers (COCs), acrylonitrile/butadiene/styrene copolymers and/or a poly(meth)acrylate.

6. Process according to one or more of Claims 1 to 5, **characterized in that** the extruded thermoplastic is a polymethyl methacrylate, impact-modified polymethyl methacrylate, a polycarbonate, a polystyrene, a styrene-acrylonitrile plastic, polyvinyl chloride, polyolefin, acrylonitrile-butadiene-styrene (ABS) plastic or a mixture (blend) of various thermoplastics.

7. Process according to one or more of Claims 1 to 6, **characterized in that** the extruded thermoplastic is a polymethyl methacrylate whose Vicat softening point is in the range from 85 to 110°C, and the roll temperature is in the range from 80 to 140°C.

8. Extruded foil or sheet capable of production by a process according to one or more of Claims 1 to 7, **characterized in that** it is composed of a thermoplastic and has an electrically conductive coating whose surface resistance is smaller than 10¹⁰ Ω, where the increase in this surface resistance after 5000 cycles of a scrub test to DIN 53 778 is not more than one power of ten.

9. Foil or sheet according to Claim 8, **characterized in that** the layer thickness of the electrically conductive coating is in the range from 200 to 5000 nm.

10. Use of foils or sheets according to one or more of Claims 8 to 9 for housings, for equipment, or for lamination foils for lamination to components to be used in cleanrooms, for machine covers, for incubators, for displays, for display screens and display-screen covers, for rear-projection screens, for medical apparatus and for electrical devices.

## Revendications

1. Procédé en vue de la fabrication de feuilles ou de plaques faites en matière synthétique thermoplastique à revêtement électroconducteur, à l'aide des étapes de procédé
a) application par enduction, sur une face d'une feuille de support faite en matière synthétique thermoplastique, d'une composition de vernis à base de particules d'oxyde de silicium et de particules semiconductrices inorganiques dans un solvant ou dans un mélange de solvants, qui peut contenir, le cas échéant, en outre, un agent nivelant, par raclage, par plongée ou par immersion ou par revêtement continu et par séchage subséquent du revêtement,
b) extrusion d'un boudin à l'état fondu d'une matière synthétique thermoplastique, qui présente la même température de ramollissement ou une température de ramollissement inférieure à celle de la matière synthétique thermoplastique de la feuille de support, sur une installation d'extrusion à travers une buse d'extrusion à fente large pour les plaques ou les feuilles, avec un équipement de lissage à rouleaux subséquent,
c) rapprochement de la face revêtue de la feuille de support du boudin à l'état fondu de la matière synthétique thermoplastique extrudée dans la fente de rouleaux de l'équipement de lissage et à une température de rouleaux qui ne se situe pas à plus de 5°C en-dessous de la température de ramollissement Vicat de la matière synthétique thermoplastique extrudée, permettant ainsi la formation d'un composite de la feuille de support revêtue à l'aide du boudin à l'état fondu,
d) retrait de la feuille de support du composite à une température de fusion qui se situe au moins 5°C en dessous de la température de ramollissement Vicat de la matière synthétique thermoplastique extrudée, le revêtement de la feuille de support restant sur la matière synthétique thermoplastique extrudée,
e) refroidissement de la bande en matière plastique à la température environnante ou ambiante, dans la mesure où ceci n'a pas déjà eu lieu dans l'étape d).

2. Procédé selon la revendication 1, **caractérisé en ce que** l'on utilise, en tant que particules d'oxyde de silicium, des particules de SiO₂ dissoutes par voie colloïdale.

3. Procédé selon la revendication 1 ou 2, **caractérisé en ce que** la composition de vernis contient, dans l'eau en tant que solvant, de 1 à 2 % en poids de particules de SiO₂ et de 2,5 à 7,5 % en poids de particules d'oxyde antimoine-étain.

4. Procédé selon une ou plusieurs des revendications 1 à 3, **caractérisé en ce que** la composition de vernis contient en outre, en tant qu'agent nivelant, un agent tensioactif ou des mélanges d'agents tensioactifs.

5. Procédé selon une ou plusieurs des revendications 1 à 4, **caractérisé en ce que** la feuille de support se compose d'un polyamide, d'un polycarbonate, d'un polystyrène, d'un polyester, par exemple de téréphtalate de polyéthylène (PET), qui peuvent aussi être modifiés à l'aide de glycol, de téréphtalate de polybutylène (PBT), de copolymères cyclo-oléfiniques (COC), de copolymères acrylonitrile/butadiène/styrène et/ou d'un poly(méth)acrylate.

6. Procédé selon une ou plusieurs des revendications 1 à 5, **caractérisé en ce que** la matière synthétique thermoplastique extrudée est une matière synthétique de polyméthylméthacrylate, un polyméthylméthacrylate à impact modifié, une matière synthétique de polycarbonate, une matière synthétique de polystyrène, une matière synthétique styrène-acrylonitrile, une matière synthétique de chlorure de polyvinyle, une matière synthétique de polyoléfines, une matière synthétique acrylonitrile-butadiène-styrène (ABS) ou un mélange (mixture) de matières synthétiques thermoplastiques diverses.

7. Procédé selon une ou plusieurs des revendications 1 à 6, **caractérisé en ce que** la matière synthétique thermoplastique extrudée est une matière synthétique de polyméthylméthacrylate ayant une température de ramollissement Vicat dans la plage de 85 à 110°C et **en ce que** la température des rouleaux se situe dans la plage de 80 à 140°C.

8. Feuille ou plaque extrudée, que l'on peut fabriquer conformément à un procédé selon une ou plusieurs des revendications 1 à 7, **caractérisée en ce qu'**elle se compose d'une matière synthétique thermoplastique et **en ce qu'**elle présente un revêtement électroconducteur ayant une résistance superficielle inférieure à 10¹⁰ ohms, la résistance superficielle n'augmentant pas de plus d'une puissance de dix après une sollicitation d'essai de décapage, conformément à la norme DIN 53 778, de 5 000 cycles.

9. Feuille ou plaque selon la revendication 8, **caractérisée en ce que** l'épaisseur de couche du revêtement électroconducteur se situe dans la plage de 200 à 5 000 nm.

10. Utilisation de feuilles ou de plaques selon une ou plusieurs des revendications 8 à 9, pour des enveloppes, des équipements ou pour des feuilles laminées en vue du contre-collage d'articles d'équipement à utiliser dans des chambres propres, pour des recouvrements de machines, des incubateurs, des affichages, des écrans et des recouvrements d'écrans, pour des écrans de rétroprojection, pour des appareils médicaux et pour des appareils électroménagers.
